# EUROPÄISCHE PATENTSCHRIFT

(11) **EP 2 357 151 B1**
(45) Veröffentlichungstag und Bekanntmachung des Hinweises auf die Patenterteilung: **28.10.2015**
(21) Anmeldenummer: 11154449.0
(22) Anmeldetag: 15.02.2011
(51) Int. Cl.: B67C 3/22, F16J 15/32

(54) **Medienverteilvorrichtung für Abfüllanlagen**
Media distribution device for filling assemblies
Dispositif de répartition de fluide pour installations de remplissage

(30) Priorität: 17.02.2010 DE 102010008366
(43) Veröffentlichungstag der Anmeldung: 17.08.2011
(73) Patentinhaber: Krones AG, 93073 Neutraubling (DE)
(72) Erfinder: Weber, Michael, 93177, Altenthann (DE)
(74) Vertreter: Bittner, Bernhard

(56) Entgegenhaltungen:
- WO-A1-2008/019831
- AT-U1- 7 274
- DE-A1- 19 953 925
- DE-A1-102006 004 027
- DE-U1- 20 018 509
- DE-U1- 29 620 323
- US-A- 3 601 417
- US-A1- 2005 184 468

## Beschreibung

Die vorliegende Erfindung bezieht sich auf den Bereich der getränkeherstellenden Industrie und insbesondere auf Füllanlagen zum Abfüllen von Getränken in Behältnisse. Aus dem Stand der Technik sind derartige Abfüllanlagen seit Langem bekannt. Dabei ist es auch bekannt, dass bei derartigen Abfüllanlagen Behälterbehandlungsmaschinen wie beispielsweise Rins-, Sterilisations- oder Fülleinrichtungen zum Einsatz kommen und beispielsweise auf einen kreisförmigen Träger montiert sind und ein Behandeln der Behältnisse während deren Transport erfolgt. Zu diesem Zweck werden im Stand der Technik

Medienverteilvorrichtungen eingesetzt, welche beispielsweise einen zentralen stehenden Hauptkanal zum Leiten des Mediums aufweisen, sowie diesem Kanal gegenüber bewegliche Kanäle, welche zu den einzelnen Fülleinrichtungen führen. Auch werden dabei teilweise Ringkanäle für ein flüssiges Medium zwischen dem drehenden und dem stehenden Teil ausgebildet. Daher ist es bei diesen Vorrichtungen erforderlich, die stehenden und drehenden Teile gegeneinander abzudichten.

Dabei ist es auch bekannt, dass die Überführung von Medien, d. h. von Gasen und Flüssigkeiten aus stehenden Bauteilen in rotierende Bauteile durch eine Welle erfolgt, an der alle Medien angeschlossen sind sowie ein einteilig oder mehrteilig aufgebautes Gehäuse, welches diese Welle umschließt und aus dem die Medien wieder austreten. Üblicherweise sind dabei die Welle und das Gehäuse konzentrisch verbaut und führen eine Drehbewegung aus. Die Medien werden daher von der Welle in das Gehäuse überführt und durch Dichtungen voneinander oder zur Umgebung getrennt.

Im Stand der Technik werden dabei Elastomerdichtungen, PTFE-Dichtungen aber auch Gleitringdichtungen verwendet.

Die DE 102006038747 A1 beschreibt eine Dichtanordnung für eine Drehlagervorrichtung. Dabei werden wenigstens zwei voneinander beabstandete Dichtungen eingesetzt zwischen denen eine Kammer zur Aufnahme eines Barrieremediums angeordnet ist. Mit dieser Gestaltung werden daher so genannte Trenngase bzw. Sperrgase zur Erzeugung der Dichtwirkung verwendet. Auf diese Weise ist es jedoch erforderlich, permanent dieses Barrieremedium im Betrieb vorzuhalten.

Die DE 296 20 323 U1 zeigt eine Medienverteilvorrichtung, gemäß dem Oberbegriff von Anspruch 1, für rotierende Gefäßfüllmaschinen. Die Medienverteilvorrichtung ist hierbei um eine Drehachse drehbar gegenüber einem Hauptkanal angeordnet und zwischen diesen beiden Elementen sind mehrere Dichtungseinrichtungen vorgesehen, welche aus einem Gehäuse und zwei Dichtringen aus Kunststoff aufgebaut sind.

Die oben erwähnten PTFE-Dichtungen sind meist als Lippendichtung ausgeführt bei denen die benötigte Anpresskraft, d. h. die Vorspannkraft an die Welle, durch den Mediendruck und die Materialeigenschaften erzeugt wird. Die Lebensdauer derartiger Dichtungen ist jedoch relativ gering und daher wird die Dichtkraft zusätzlich durch Federelemente erhöht. Dabei werden im Stand der Technik Metallfedern in unterschiedlichsten Geometrien eingesetzt wie beispielsweise V-Federn, Spiralfedern und ähnliche. Daneben werden zur Verbesserung der Reinigung und der Hygiene die Federelemente mit Füllmassen wie Silikonen oder Kunststoff gefüllt oder rückseitig in die Dichtung montiert damit keine Medienberührung vorhanden ist. Derartige Dichtungen erreichen zwar eine zufrieden stellende Dichtwirkung, jedoch unterliegen solche Dichtungen, die zur Vorspannungserhöhung Metallfedern insbesondere im produktberührten Bereich aufweisen, unter bestimmten Bedingungen der Korrosion und führen daher zur Zerstörung der Dichtung. Auch sind die Reinigungseigenschaften derartiger Dichtelemente in den meisten Anwendungen nicht ausreichend. Hierbei ist zu berücksichtigen, dass ein Austausch derartiger Dichtungen oftmals sehr aufwendig und zeitintensiv ist. Dadurch wird die Anlagenverfügbarkeit eingeschränkt. Weiterhin ist es auch bekannt, Silikonmassen in Hohlräume einzugießen, wobei sich die Silikonmasse um die Feder legt. Dabei ist jedoch diese Füllmasse mit Poren und Blasen durchzogen, welche wiederum ein Hygienerisiko darstellen. Daneben wird auch die Verbindung zwischen der Füllmasse der Feder und dem PTFE durch die Medien angegriffen und so entstehen kleinste Spalten und Risse zwischen den Bauteilen die ebenfalls zu Hygienerisiken führen.

Der vorliegenden Erfindung liegt daher die Aufgabe zugrunde, eine Medienverteilvorrichtung herzustellen, welche mit gegenüber dem Stand der Technik verbessert abdichtenden Dichteinrichtungen versehen ist. Daneben soll die Verschleißanfälligkeit derartiger Dichtungseinrichtungen reduziert werden.

Diese Aufgaben werden erfindungsgemäß durch den Gegenstand des unabhängigen Anspruchs 1 erreicht. Vorteilhafte Ausführungsformen und Weiterbildungen sind Gegenstand der Unteransprüche.

Eine erfindungsgemäße Medienverteilvorrichtung zum Verteilen wenigstens eines flüssigen oder gasförmigen (allgemein eines fließfähigen) Mediums in einer Behälterbehandlungsmaschine weist einen wenigstens abschnittsweise rohrförmigen Hauptkanal zum Transportieren eines ersten flüssigen Mediums auf sowie eine Medienführeinrichtung, welche den Hauptkanal umgibt. Dabei weist die Medienführeinrichtung wenigstens einen Kanal zum Führen eines Mediums auf, wobei die Medienführeinrichtung bezüglich einer vorgegebenen Drehachse drehbar gegenüber dem Hauptkanal angeordnet ist und wobei zwischen wenigstens einer Außenwandung des Hauptkanals und der Medienführeinrichtung wenigstens eine aus zumindest zwei Komponenten aufgebaute Dichtungseinrichtung vorgesehen ist, welche zum Abdichten von bezüglich einander drehbaren Körpern geeignet ist.

Erfindungsgemäß weist die Dichtungseinrichtung einen aus einem Kunststoff bestehenden Grundkörper auf sowie einen wenigstens teilweise an den Grundkörper anliegenden elastischen Vorspannkörper zum Vorspannen des Grundkörpers auf, wobei der Vorspannkörper ebenfalls aus einem Kunststoff besteht. Erfindungsgemäß weist der Grundkörper einen sich in radialer Richtung erstreckenden Vorsprung auf, um den Grundkörper drehfest gegenüber der Medienführeinrichtung anzuordnen. Bei den Medien, welche von der Medienführeinrichtung geführt werden, kann es sich sowohl um flüssige als auch um gasförmige Medien handeln. Vorteilhaft dient der Vorspannkörper zum Vorspannen des Grundkörpers und insbesondere bezüglich einander drehbaren Bauteile.

Dabei ist es vorgesehen, dass der Hauptkanal stehend angeordnet ist und sich die Medienführeinrichtung gegenüber dem Hauptkanal dreht. Umgekehrt wäre es jedoch auch möglich, dass die Medienführeinrichtung stehend angeordnet ist und der Hauptkanal sich dreht.

Damit werden erfindungsgemäß Dichtelemente verwendet, die mithilfe eines Elastomers vorgespannt werden, um die Dichtkraft zu erhöhen. Der Vorspannkörper dient damit dazu, den Grundkörper in Richtung der gegeneinander abzudichtenden Körper vorzuspannen. Vorteilhaft umgibt der Grundkörper den Vorspannkörper wenigstens abschnittsweise. Dabei gibt der Vorspannkörper vorzugsweise eine Kraft in einer Richtung aus, welche sich zwischen den beiden gegeneinander drehbar angeordneten Körpern erstreckt. So kann das Vorspannelement in den Grundkörper eingesetzt sein, es wäre jedoch auch möglich, dass es in einem Vulkanisationsprozess fest mit dem Grundkörper verbunden ist. Vorteilhaft weist dabei der Grundkörper eine im Wesentlichen ringförmige Gestalt auf. Auch der Vorspannkörper weist vorteilhaft eine im Wesentlichen ringförmige Gestalt auf. Vorteilhaft umgibt der Ringkörper und besonders bevorzugt auch der Vorspannkörper den Hauptkanal vollständig. Der Vorspannkörper kann in der Art eines O-Rings ausgebildet sein.

Bei einer weiteren vorteilhaften Ausführungsform weist der Grundkörper wenigstens einen Öffnungsbereich auf, in dem der Vorspannkörper nicht durch den Grundkörper verdeckt ist. Dies bedeutet, dass der Grundkörper den Vorspannkörper nicht vollständig umgibt, sondern in dem besagten Öffnungsbereich der Vorspannkörper zugänglich ist. Auf diese Weise ist es leichter möglich den Vorspannkörper in den Grundkörper einzusetzen. Auch wäre es prinzipiell möglich, den Vorspannkörper unabhängig von dem Grundkörper auszuwechseln.

Bei einer weiteren vorteilhaften Ausführungsform schließt der Grundkörper in wenigstens einem Bereich und insbesondere im Öffnungsbereich bündig mit dem Vorspannkörper ab. Damit ist hier der Vorspannkörper frontbündig in den Grundkörper eingebunden, wobei durch diese frontbündige Einbindung alle Flächen die produktberührt sind, gereinigt werden und auf diese Weise keine Hinterschneidungen oder Hohlräume bestehen wie teilweise bei Dichteinrichtungen, welche aus dem Stand der Technik bekannt sind. Vorteilhaft verläuft eine Linie des bündigen Abschlusses senkrecht zu der Drehachse, um welche sich das drehbare Bauteil dreht, sie kann jedoch auch schräg hierzu verlaufen.

Vorteilhaft ist der Grundkörper aus einem Material hergestellt, welches aus einer Gruppe von Materialien ausgewählt ist, welche PTFE (Polytetraflourethylen), PA (Polyamid), PE (Polyethylen), Kombinationen hieraus und dergleichen enthält. Besonders bevorzugt besteht der Grundkörper aus PTFE und Abwandlungen von PTFE.

Vorteilhaft ist der Vorspannkörper aus einem Material hergestellt, welches EPDM (Ethylen-Propylen-Dien-Kautschuk), FKM (Fluorkarbon-Kautschuk), HNBR (Hydrierter Acrylnitrilbutadien-Kautschuk), NBR (Nitrilkautschuk), Kombinationen hieraus und dergleichen enthält.

Vorteilhaft sind der Grundkörper und / oder der Vorspannkörper aus einem der oben genannten Materialien hergestellt, wobei den Materialien besonders bevorzugt eine mikrobizide und / oder mikrobiostatische Substanz beigemischt ist. Dadurch lässt sich das Risiko einer Verkeimung der direkten und indirekten Oberflächen an den Dichtelementen beispielsweise mit Getränkeschädlingen oder Getränkeverderbern minimieren. Alternativ ist auch eine Beschichtung des Grundkörpers und / oder des Vorspannkörpers mit mikrobioziden und / oder mikrobiostatischen Substanzen möglich. Für beide Möglichkeiten haben sich Silberionen als sehr vorteilhaft herausgestellt.

Bei einer weiteren vorteilhaften Ausführungsform ist der Vorspannkörper wenigstens teilweise mit einer Kunststoffschicht überzogen. Dabei ist es möglich, dass der aus einem Elastomer hergestellte Vorspannkörper insbesondere zur Erhöhung der chemischen Beständigkeit oder auch zur Änderung der Grundeigenschaften beschichtet oder überzogen ist. Dabei kann es sich beispielsweise um eine PTFE Schicht handeln. Auf diese Weise ist es auch möglich, die Wärmedehnung des Vorspannkörpers und des Grundkörpers besser aneinander anzupassen so dass es in Folge von Erwärmungen nicht zu unerwünschten Leckagen kommt.

Bei einer erfindungsgemäßen Ausführungsform weist der Grundkörper einen sich in einer radialen Richtung erstreckenden Vorsprung auf, um das Dichtelement, bzw. den Grundkörper drehfest gegenüber der Medienführeinrichtung bzw. dem stehenden Teil anzuordnen. Unter einer radialen Richtung wird hierbei eine radiale Richtung bezüglich der jeweiligen Drehbewegung verstanden. So ist es möglich, dass, um ein Mitdrehen der Dichtungen zu vermeiden der Grundkörper mit einer radial verlaufenden Lippe versehen beispielsweise zwischen zwei Flansche geklemmt wird und somit das Drehmoment der Dichtung übertragen wird. Daneben wäre es auch möglich, in den Vorsprung bzw. die Lippe Aussparungen einzuarbeiten, durch die eine formschlüssige Drehmomentübertragung durch Stifte oder andere Elemente, welche in diese Aussparungen greifen und welche mit dem Gehäuse verbunden sind, erreicht wird.

Bei einer nicht erfindungsgemäßen Ausführungsform liegt wenigstens ein Bereich des Vorspannkörpers unmittelbar an dem Hauptkanal oder der Medienführeinrichtung bzw. an dem stehenden Bauteil an.

Erfindungsgemäß stützt sich die Elastomerdichtung direkt am Gehäuse ab und übernimmt damit auch eine statische Dichtwirkung wobei der Vorspannkörper von dem Grundkörper gekammert wird wodurch die statische Dichtwirkung ebenfalls von dem Grundkörper übernommen wird. Ein Vorteil dieser gekammerten Version, bei der kein Bereich des Vorspannkörpers an dem Gehäuse anliegt, besteht in der einfacheren Montage der Dichtung in die Vorrichtung bzw. den Drehverteiler.

Bei einer weiteren vorteilhaften Ausführungsform weist der Grundkörper wenigstens eine Ausnehmung auf. So ist es beispielsweise möglich, dass der Grundkörper insbesondere hinter dem Vorspannkörper in derjenigen Seite, die dem Medium abgewandt ist, eine Ausnehmung aufweist bzw. frei geschnitten ist, um eine größere Volumenänderung des Vorspannkörpers beispielsweise unter Druck-, Temperatur- oder Medienkontakt zu ermöglichen ohne dabei die Vorspannung der Primärdichtung zu stark zu erhöhen.

Dieser geschaffene Hohlraum insbesondere an der produktabgewandten Seite hinter der Dichtung kann auch zu Pumpeffekten führen, die durch das Ausdehnen und Zusammenziehen des Vorspannelements bzw. der Elastomerdichtung entstehen. Durch diese Effekte können Keime und Verunreinigungen auf die dem Produkt zugewandte Seite gefördert werden. Daher weist bei einer weiteren vorteilhaften Ausführungsform der Grundkörper einen Kanal auf, der insbesondere bis zu dem Vorspannkörper reicht. Durch diese Verbindungsbohrungen zum Rückraum der Dichtung kann der oben erwähnte Pumpeffekt vermieden werden. Weiterhin besteht die Möglichkeit die Ausnehmung via Verbindungsbohrung mit einem Reinigungs- und / oder Sterilisationsmedium zu spülen.

Vorteilhaft sind der Grundkörper und der Vorspannkörper aus unterschiedlichen Kunststoffmaterialen hergestellt.

Bei einer weiteren vorteilhaften Ausführungsform weist die Dichtungseinrichtung neben dem Grundkörper und dem Vorspannkörper keine weiteren Komponenten auf. Insbesondere ist die Dichtungseinrichtung metallfrei ausgeführt, weist also insbesondere keine Metallfedern oder dergleichen auf, bei denen gegebenenfalls eine Korrosion zu befürchten wäre. Weiterhin ist eine Dichtungseinrichtung zum Abdichten von Körpern gezeigt wobei diese Körper bezüglich einander drehbeweglich angeordnet sind.

Danach weist die Dichtungseinrichtung einen aus einen Kunststoff bestehenden Grundkörper auf sowie einen wenigstens teilweise an einem Grundkörper anliegendem elastischen Vorspannkörper zum Vorspannen des Grundkörpers. Dabei besteht auch der Vorspannkörper aus einem Kunststoff und der Vorspannkörper weist bevorzugt keine Fläche auf, welche mit dem drehbeweglich angeordneten Körper in Kontakt bringbar ist. Der Vorspannkörper dient hier also entweder zum Vorspannen oder allenfalls zur statischen Abdichtung. Vorzugsweise ist die Dichtungseinrichtung in der oben beschriebenen Weise ausgeführt. Vorteilhaft weist auch hier diese Dichtungseinrichtung neben dem Grundkörper und dem Vorspannkörper keine weiteren Komponenten auf.

Weitere Vorteile und Ausführungsformen ergeben sich aus den beigefügten Zeichnungen: Darin zeigen:
- Fig. 1: eine abschnittsweise Darstellung eines Drehverteilers;
- Fig. 2 a: eine Detaildarstellung mit einer Dichtungsanordnung und einer ersten Ausführungsform;
- Fig. 2b: eine vergrößerte Darstellung der Dichtungsanordnung aus Fig. 2a;
- Fig. 3a: eine Ausführungsform mit einer Dichtungsanordnung in einer zweiten Ausführungsform;
- Fig. 3b: eine vergrößerte Darstellung der Dichtungsanordnung aus Fig. 3a;
- Fig. 4a: eine Darstellung einer weiteren Ausführungsform einer Dichtungsanordnung; und
- Fig. 4b: eine vergrößerte Darstellung der in Fig. 4a gezeigten Dichtungsanordnung.

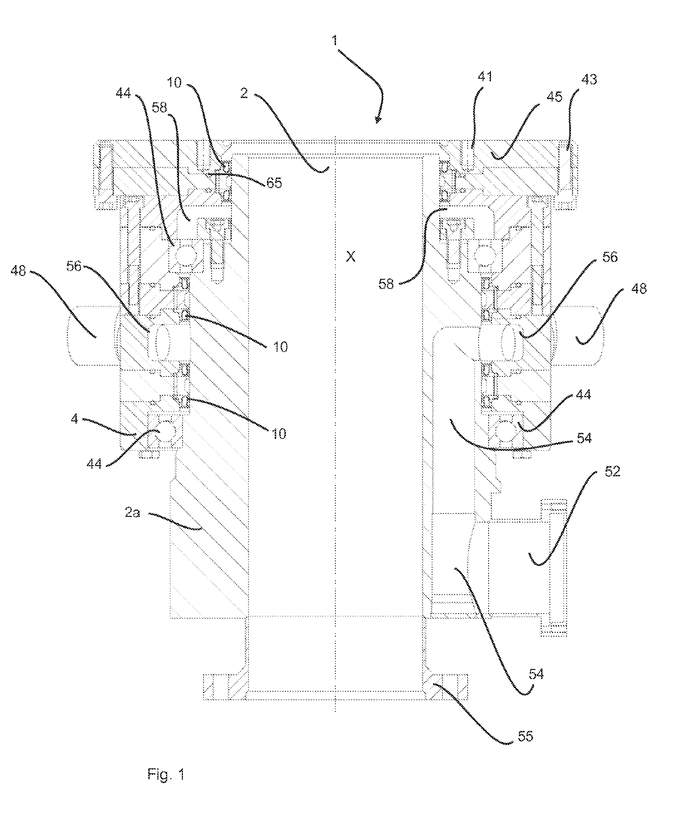

Fig. 1 zeigt zur Veranschaulichung eine teilweise Darstellung eines Drehverteilers bzw. einer Medienverteilvorrichtung 1. Diese Medienverteileinrichtung 1 ist konzentrisch bezüglich einer Drehachse X innerhalb eines Karussells einer nicht weiter dargestellten kontinuierlich arbeitenden Abfüllmaschine mit einer Vielzahl an, am Umfang der Füllmaschine gleichmäßig verteilten, Füllventilen angeordnet. Dabei ist ein Hauptkanal 2 mit einer Außenwandung 2a vorgesehen. Dieser Hauptkanal ist bei dieser Ausführungsform stehend angeordnet. Das Bezugszeichen 4 bezieht sich auf eine Medienführeinrichtung, welche unterschiedliche Kanäle 58, 56 aufweist, um Medien zu führen. Diese Medienführeinrichtung ist dabei drehbar bezüglich einer Drehachse X angeordnet und dreht sich synchron mit dem nicht gezeigten Füllerkarussell. Das Bezugszeichen 44 kennzeichnet Lager, mit denen die Medienführeinrichtung 4 drehbar gegenüber dem Hauptkanal 2 angeordnet ist. Das Bezugszeichen 10 kennzeichnet Dichteinrichtungen, um die gegenüber einander drehbaren Teile bezüglich einander abzudichten. Das Bezugszeichen 2a kennzeichnet eine Wandung des Hauptkanals 2. Das Bezugszeichen 65 kennzeichnet einen O-Ring zum zusätzlichen Abdichten.

Über einen Anschluss 55 wird das abzufüllende Produkt zugeführt und gelangt so durch den Hauptkanal 2. Das Bezugszeichen 45 kennzeichnet einen drehbar gegenüber dem Hauptkanal und über Verschraubungen 43 an der Medienführeinrichtung 4 angeordneten Träger 45 Oberhalb dieses Träger kann ein (nicht gezeigter) ebenfalls drehender Produkttank vorgesehen sein, von dem aus das Produkt auf die einzelnen Füllventile verteilt wird. Dieser Tank kann dabei beispielsweise mit Hilfe von Bohrungen 41 an dem Träger 45 angeordnet sein und dreht sich ebenfalls synchron mit dem Füllerkarussell.

Die in Fig. 1 dargestellte oberste Dichtungseinrichtung 10 dichtet den Produktweg im Hauptkanal 2 nach unten hin ab. Das Bezugszeichen 52 bezieht sich auf einen Anschluss zum Zuführen eines Reinigungsmediums. Ausgehend von diesem (nicht drehenden) Anschluss 52 gelangt das Reinigungsmedium durch einen ebenfalls feststehenden Kanal 54 in einen Ringkanal 56. Von diesem Ringkanal 56 aus kann das Reinigungsmedium auf eine Vielzahl von mittelbar, d.h. über Zwischenschaltung eines (nicht gezeigten) Sammelkanals auf dem Karussell mit den Füllventilen verbundenen, (drehend angeordneten) Auslaufstutzen 48 verteilt werden. Alternativ ist eine unmittelbare Verteilung des Reinigungsmediums direkt zu den Füllventilen möglich. Auch dieser Ringkanal 56 ist wiederum mittels zweier Dichteinrichtungen 10 abgedichtet. Die einzelnen Dichteinrichtungen 10 setzen sich hier jeweils aus einem oberen Abschnitt und einem unteren Abschnitt zusammen.

Ein (nicht gezeigter) Ringkanal zur Verteilung von Verbrauchsmedien, wie beispielsweise Inertgas oder Vakuum, ist vom Prinzip her identisch ausgeprägt wie der Ringkanal 56. Lediglich die Nennweiten werden der Anwendung entsprechend angepasst.

Das Bezugszeichen 58 bezieht sich auf einen in der Medienführeinrichtung 4 angeordneten Spülkanal, der zum Reinigen unter anderem der Lager 44 dient.

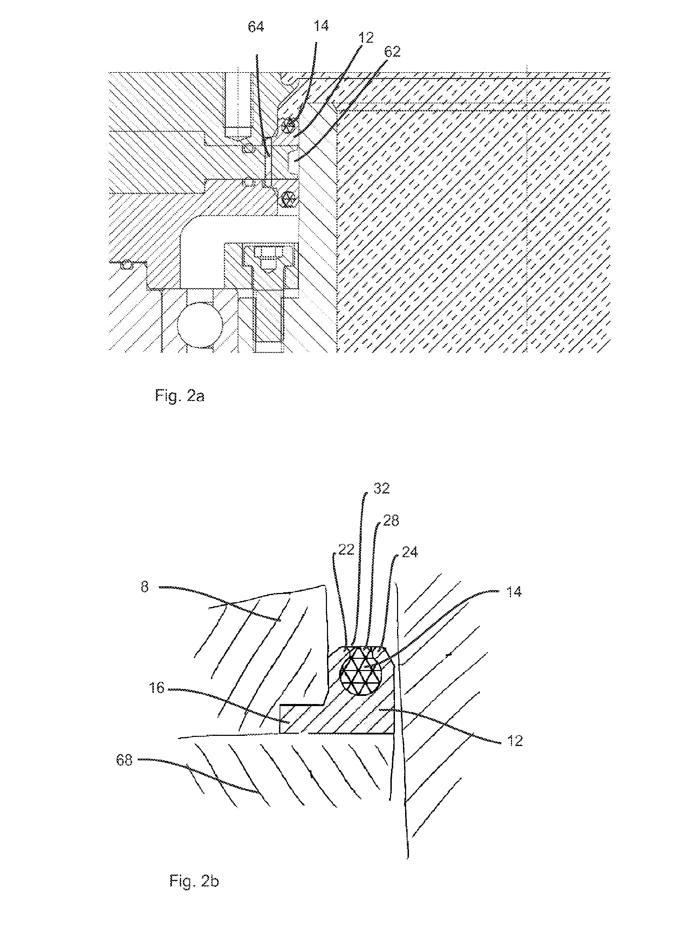

Die Figuren 2a und 2b zeigen eine erfindungsgemäße Vorrichtung in einer ersten Ausführungsform. Dabei ist hier eine Dichtungseinrichtung 10 vorgesehen, welche wie in Fig. 2a gezeigt, jeweils einen Grundkörper 12 und einen Vorspannkörper 14 aufweist. Genauer gesagt, sind hier zwei derartige Dichtungseinrichtungen 10 vorgesehen, die einen Kanal begrenzen. Das Bezugszeichen 62 kennzeichnet einen Leckageraum, in dem sich Medium von der bezüglich der Dichtungseinrichtung 10 gegenüberliegenden Seite im Falle eines Defektes der einer Dichtungseinrichtung 10 sammeln kann. Dieses fallweise vorhandene Medium kann über einen (nicht gezeigten) Leckagekanal in der Außenwandung 2a beispielsweise nach unten abgeführt werden und dort beispielsweise über einen ebenfalls nicht gezeigten Sensor erkannt werden. Das Bezugszeichen 64 kennzeichnet eine vorzugsweise formschlüssige Verdrehsicherung. Diese Verdrehsicherung kann dabei in einen eine Klemmlippe bildenden Vorsprung 16 des Grundkörpers 12 eingreifen und überträgt die Rotation der Medienführeinrichtung 4 auf die Dichtungseinrichtung 10.

Ein einen Flansch bildender Bereich 68, welcher hier ein Bestandteil der Medienführeinrichtung 4 ist, bewirkt ein Einklemmen der Dichtungseinrichtung 10. Auch dadurch wird neben einer axialen wie radialen Fixierung der Dichtungseinrichtung 10 die Rotation der Medienführeinrichtung 4 auf die Dichtungseinrichtung 10 übertragen.

Das Bezugszeichen 2a kennzeichnet wiederum die Außenwandung des Kanals 2, die als feststehende Hohlwelle ausgeführt ist.

Fig. 2b zeigt eine detaillierte Darstellung der Dichtungsanordnung aus Fig. 2a. Man erkennt, dass hier der Grundkörper 12 zwei Abschnitte 22 und 24 aufweist, wobei der Abschnitt 24 eine primäre Dichtlippe ist und der Abschnitt 22 eine statische Dichtlippe.

Das in seiner Gesamtheit mit 14 bezeichnete Vorspannelement weist einen Vorsprung 28 auf, der hier bündig nach oben hin mit den beiden Elementen 22 und 24 abschließt. Auf diese Weise können, wie oben erwähnt, Reinigungsvorgänge der Dichtungseinrichtung in ihrer Gesamtheit verbessert werden. So ist es hier möglich, dass das Vorspannelement als Körper mit im Wesentlichen kreisförmigen Querschnitt und zusätzlich dem Vorsprung 28 ausgebildet ist. Die Bewegung findet hier zwischen der Primärdichtlippe 24 und der Außenwandung 2a statt.

Der Vorsprung 16 erstreckt sich, wie oben erwähnt, in einem Bereich der Medienführeinrichtung 4 und wird von den Bereichen 68 (von unten) sowie 8 (von oben) gehalten. In den Bereich 68 kann wie vorstehend dargestellt ein Leckageraum 62 eingearbeitet sein.

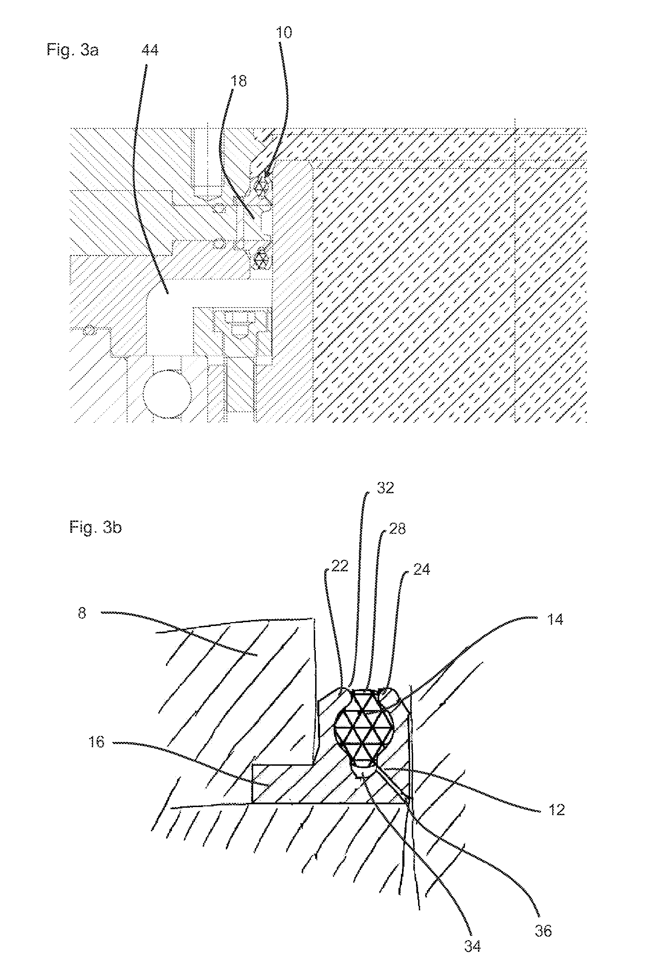

Die Figuren 3a und 3b zeigen eine weitere Ausführungsform einer erfindungsgemäßen Dichtung. Die Anordnung der Vorrichtung selbst ist dabei wie in Fig. 2a, so dass hierauf verwiesen werden kann.

3b zeigt die Dichtungseinrichtung in vergrößerter Darstellung. Auch hier ist wieder ein Grundkörper 12 vorgesehen, der die beiden Seitenelemente 22 und 24 aufweist. Auch schließt hier der Vorsprung 28 wieder im Wesentlichen bündig mit den beiden Elementen 22 und 24 ab. Daneben ist bei dieser Ausführungsform eine Verbindungsbohrung bzw. ein Kanal 36 vorgesehen, welche eine Ausnehmung 34, welche in dem Grundkörper 12 unterhalb des Vorspannelements 14 ausgebildet wird, an den Leckageraum 62 anschließt. Auf diese Weise weist hier das Vorspannelement 14 ein Spiel nach unten hin auf, so dass sich das Vorspannelement 14 auch ausdehnen kann. Genauer gesagt ist der Grundkörper 12 in dem Bereich 34 frei geschnitten. Auf diese Weise ist ein Spiel zwischen dem Vorspannelement 14 und dem Grundkörper 12 vorgesehen. Über die Verbindungsbohrung 36 und den Leckageraum 62 können dem Vorspannelement 14 auch Reinigungsmedien zugeführt werden. In Figur 3b mündet die Verbindungsbohrung 36 sehr nahe am Vorspannelement 14 in die Ausnehmung 34 ein. Vorzugsweise mündet die Verbindungsbohrung 36 am tiefsten Punkt der Ausnehmung 34 in die Ausnehmung 34. So können sich in diesem Bereich keine Medien ansammeln und die Ausnehmung 34 läuft leer. Das Bezugszeichen 32 kennzeichnet auch hier wieder die frontbündige Kontur.

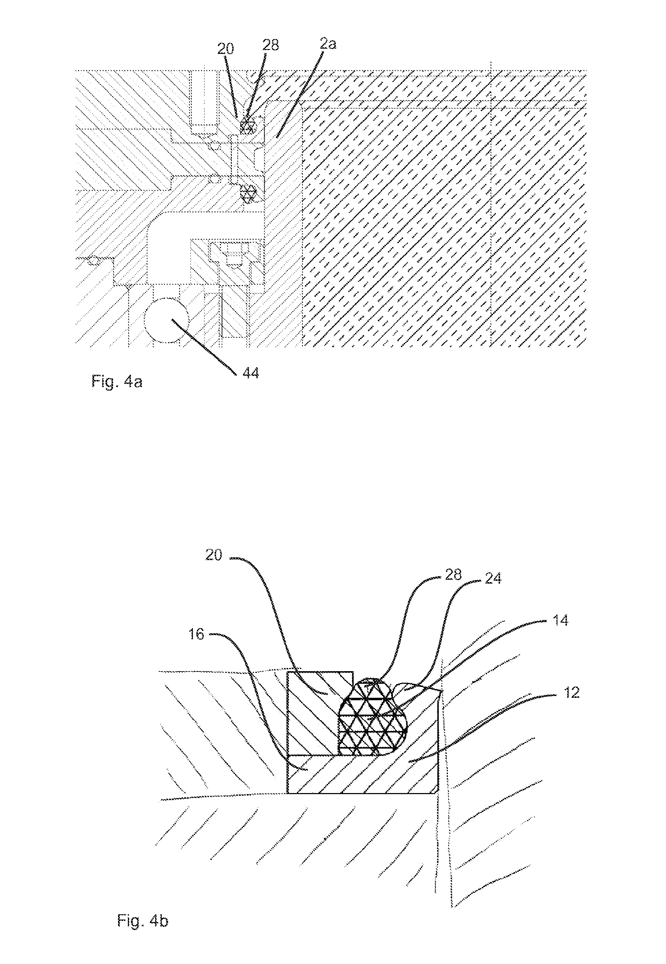

Die Figuren 4a und 4b zeigen eine weitere Ausführungsform einer erfindungsgemäßen Vorrichtung, wobei auch hier wieder im Wesentlichen auf Fig. 4b Bezug genommen wird. Auch hier ist ein Grundkörper 12 vorgesehen, das Vorspannelement 14 liegt hier jedoch nicht nur an dem Grundkörper 12 an, sondern auch an einem Bestandteil 20 der Medienführeinrichtung. Damit bewirkt hier das Vorspannelement 14 auch eine statische Dichtung, d. h. eine Dichtung gegenüber dem drehenden Bestandteil. Das Bestandteil 20 der Medienführeinrichtung kann einstückig mit der Medienführeinrichtung 4 verbunden sein, wie in Figur 4a dargestellt oder auch als zusätzliches Bauteil eingesetzt werden wie in Figur 4b dargestellt.

Bei der hier gezeigten Ausführungsform schließt ebenfalls das Vorspannelement zumindest im Wesentlichen bündig mit dem Grundkörper ab, wobei die Verbindungslinie der Kontur 32 hier schräg verläuft. Weiterhin weist der Grundkörper auch hier wieder einen radial herausragenden Vorsprung 16, d.h. eine Klemmlippe auf, der zum Einklemmen des Grundkörpers dient.

Selbstverständlich ist die erfindungsgemäße Dichtungseinrichtung nicht limitiert auf die in den Ausführungsbeispielen gezeigte Anordnung für eine Medienzuführung von unten. Ebenso können die feststehenden Anschlüsse 52, 55 auch in Richtung der Drehachse von oben her zugeführt werden.

Weiterhin ist es möglich mehrere beispielsweise der beschriebenen Ringkanäle 56 übereinander anzuordnen und sie jeweils mit Dichteinrichtungen 10 abzudichten.

Ebenso ist die erfindungsgemäße Medienverteilvorrichtung geeignet zum Einsatz in anderen Behälterbehandlungsmaschinen, wie beispielsweise Rotationsrinsern oder -sterilisatoren. Hierbei werden die jeweils zur Anwendung kommenden Medien wie beispielsweise Wasser, Sterilwasser, Sterilluft, Inertgase, Desinfektionsmittellösungen, gasförmiges Desinfektionsmittel, Abfüllprodukt und dergleichen und wie vorstehend beschrieben CIP-Medien über einen oder mehrere Ringkanäle 56 zu den einzelnen Behälterbehandlungsstationen, beispielsweise Rinsdüsen, verteilt. Da bei diesen Maschinen für gewöhnlich kein Produkttank auf dem Karussell notwendig ist, kann hierbei anstatt einer feststehenden Hohlwelle, die den Hauptkanal 2 ausbildet, auch eine Welle aus Vollmaterial eingesetzt werden, in die bei Fertigung entsprechend der Anzahl der zur Anwendung kommenden Medien Kanäle 54 eingebohrt werden, die dann entsprechend an Ringkanäle 56 angeschlossen sind.

### Bezugszeichenliste

- 1: Medienverteilvorrichtung
- 2: Kanal
- 2a: Außenwandung
- 4: Medienführeinrichtung
- 8, 68: Bereich
- 10: Dichtungseinrichtung
- 12: Grundkörper
- 16: Vorsprung
- 14: Vorspannkörper
- 20: Bestandteil der Medienführeinrichtung
- 22, 24: Abschnitte
- 28: Vorsprung
- 32: Kontur
- 34: Ausnehmung
- 36: Verbindungsbohrung, Kanal
- 41: Bohrung
- 43: Verschraubung
- 44: Lager
- 45: Träger
- 48: Anschluss
- 52, 55: Anschluss
- 54: feststehender Kanal
- 56: Ringkanal
- 58: Kanal
- 62: Leckageraum
- 64: Verdrehsicherung
- 65: O-Ring
- X: Drehachse

## Patentansprüche

1. Medienverteilvorrichtung (1) zum Verteilen wenigstens eines flüssigen oder gasförmigen Mediums in einer Behälterbehandlungsmaschine mit einem wenigstens abschnittsweise rohrförmigen Hauptkanal (2) zum Transportieren eines ersten flüssigen Mediums, mit einer Medienführeinrichtung (4), welche den Hauptkanal (2) umgibt, wobei die Medienführeinrichtung (4) wenigstens einen Kanal (56) zum Führen eines Mediums aufweist und wobei die Medienführeinrichtung (4) bezüglich einer vorgegebenen Drehachse (X) drehbar gegenüber dem Hauptkanal (2) angeordnet ist und wobei zwischen wenigstens einer Außenwandung (2a) des Hauptkanals (2) und der Medienführeinrichtung (4) wenigstens eine aus wenigstens zwei Komponenten (12, 14) aufgebaute Dichtungseinrichtung (10) vorgesehen ist, welche zum Abdichten von bezüglich einander drehbaren Körpern geeignet ist,
**dadurch gekennzeichnet, dass**
die Dichtungseinrichtung (10) einen aus einem Kunststoff bestehenden Grundkörper (12) aufweist, sowie einen wenigstens teilweise an dem Grundkörper (12) anliegenden elastischen Vorspannkörper (14) zum Vorspannen des Grundkörpers (12), wobei der Vorspannkörper (14) aus einem Kunststoff besteht und wobei der Grundkörper (12) einen sich in radialer Richtung erstreckenden Vorsprung (16) aufweist, um den Grundkörper (12) drehfest gegenüber der Medienführeinrichtung (4) anzuordnen, und wobei der Grundkörper (12) zwei Abschnitte (22) und (24) aufweist, wobei der Abschnitt (24) eine primäre Dichtlippe und der Abschnitt (22) eine statische Dichtlippe ist, und wobei durch die beiden Dichtlippen (22, 24) der Vorspannkörper (14) derart eingekammert ist, dass kein Bereich des Vorspannkörpers (14) die Außenwandung (2a) des Kanals (2) berührt.

2. Medienverteileinrichtung (1) nach wenigstens einem der vorangegangenen Ansprüche, **dadurch gekennzeichnet, dass**
der Grundkörper (12) und der Vorspannkörper wenigstens abschnittweise aneinander anliegen.

3. Medienverteileinrichtung (1) nach wenigstens einem der vorangegangenen Ansprüche,
**dadurch gekennzeichnet, dass**
der Grundkörper (12) wenigstens einen Öffnungsbereich aufweist, in dem der Vorspannkörper nicht durch den Grundkörper (12) verdeckt ist.

4. Medienverteileinrichtung (1) nach wenigstens einem der vorangegangenen Ansprüche,
**dadurch gekennzeichnet, dass**
der Grundkörper (12) in wenigstens einem Bereich und insbesondere in dem Öffnungsbereich bündig mit dem Vorspannkörper (14) abschließt.

5. Medienverteileinrichtung (1) nach wenigstens einem der vorangegangenen Ansprüche,
**dadurch gekennzeichnet, dass**
der Grundkörper aus einem Material hergestellt ist, welches aus einer Gruppe von Materialien ausgewählt ist, welche PTFE, PA, PE, Kombinationen hieraus und dergleichen enthält.

6. Medienverteileinrichtung (1) nach wenigstens einem der vorangegangenen Ansprüche,
**dadurch gekennzeichnet, dass**
der Vorspannkörper aus einem Material hergestellt ist, welches aus einer Gruppe von Materialien ausgewählt ist, welche EPDM, FKM, HNBR, NBR, Kombinationen hieraus und dergleichen enthält.

7. Medienverteileinrichtung (1) nach wenigstens einem der vorangegangenen Ansprüche,
**dadurch gekennzeichnet, dass**
der Vorspannkörper (14) wenigstens teilweise mit einer Kunststoffschicht überzogen ist.

8. Medienverteileinrichtung (1) nach wenigstens einem der vorangegangenen Ansprüche,
**dadurch gekennzeichnet, dass**
wenigstens ein Bereich des Vorspannkörpers unmittelbar an dem Hauptkanal (2) oder der Medienführeinrichtung (4) anliegt.

9. Medienverteileinrichtung (1) nach wenigstens einem der vorangegangenen Ansprüche,
**dadurch gekennzeichnet, dass**
der Grundkörper wenigstens eine Ausnehmung (34) aufweist.

10. Medienverteileinrichtung (1) nach wenigstens einem der vorangegangenen Ansprüche,
**dadurch gekennzeichnet, dass**
in dem Grundkörper ein Kanal (36) angeordnet ist, der bis zu dem Vorspannkörper reicht.

11. Medienverteileinrichtung (1) nach wenigstens einem der vorangegangenen Ansprüche,
**dadurch gekennzeichnet, dass**
die Dichtungseinrichtung neben dem Grundkörper (12) und dem Vorspannkörper (14) keine weiteren Komponenten aufweist.

12. Medienverteileinrichtung (1) nach wenigstens einem der vorangegangenen Ansprüche,
**dadurch gekennzeichnet, dass**
die Dichtungseinrichtung metallfrei ausgeführt ist.

## Claims

1. Media distributing apparatus (1) for distributing at least one liquid or gaseous medium in a container treatment machine, comprising a main channel (2) which is tubular at least in sections for transporting a first liquid medium, and comprising a media guiding device (4) which surrounds the main channel (2), wherein the media guiding device (4) comprises at least one channel (56) for guiding a medium and wherein the media guiding device (4) is arranged so as to be able to rotate relative to the main channel (2) about a predefined axis of rotation (X) and wherein at least one sealing device (10) composed of at least two components (12, 14) is provided between at least one outer wall (2a) of the main channel (2) and the media guiding device (4), said sealing device being suitable for sealing off bodies which are able to rotate relative to one another, **characterised in that** the sealing device (10) comprises a main body (12) made from a plastics material and an elastic pretensioning body (14) bearing at least partially against the main body (12) for pretensioning the main body (12), wherein the pretensioning body (14) is made from a plastics material and wherein the main body (12) comprises a protrusion (16) which extends in the radial direction in order to arrange the main body (12) so as not to be able to rotate with respect to the media guiding device (4) and wherein the main body (12) comprises two portions (22) and (24), wherein portion (24) is a primary sealing lip and portion (22) is a static sealing lip and wherein by means of the two sealing lips (22, 24) the pretensioning body (14) is surrounded in such a way that no region of the pretensioning body (14) contacts the outer wall (2a) of the channel (2).

2. Media distributing apparatus (1) according to at least one of the preceding claims, **characterised in that** the main body (12) and the pretensioning body bear against one another at least in some sections.

3. Media distributing apparatus (1) according to at least one of the preceding claims, **characterised in that** the main body (12) has at least one opening region, in which the pretensioning body is not covered by the main body (12).

4. Media distributing apparatus (1) according to at least one of the preceding claims, **characterised in that** the main body (12) ends flush with the pretensioning body (14) in at least one region and in particular in the opening region.

5. Media distributing apparatus (1) according to at least one of the preceding claims, **characterised in that** the main body is made from a material selected from a group of materials which contains PTFE, PA, PE, combinations thereof and the like.

6. Media distributing apparatus (1) according to at least one of the preceding claims, **characterised in that** the pretensioning body is made from a material selected from a group of materials which contains EPDM, FKM, HNBR, NBR, combinations thereof and the like.

7. Media distributing apparatus (1) according to at least one of the preceding claims, **characterised in that** the pretensioning body (14) is at least partially coated with a plastics material layer.

8. Media distributing apparatus (1) according to at least one of the preceding claims, **characterised in that** at least one region of the pretensioning body bears directly against the main channel (2) or the media guiding device (4).

9. Media distributing apparatus (1) according to at least one of the preceding claims, **characterised in that** the main body has at least one recess (34).

10. Media distributing apparatus (1) according to at least one of the preceding claims, **characterised in that** a channel (36) is arranged in the main body, said channel extending as far as the pretensioning body.

11. Media distributing apparatus (1) according to at least one of the preceding claims, **characterised in that** the sealing device comprises no further components besides the main body (12) and the pretensioning body (14).

12. Media distributing apparatus (1) according to at least one of the preceding claims, **characterised in that** the sealing device is free of metal.

## Revendications

1. Dispositif de distribution de fluide (1) permettant de distribuer au moins un fluide liquide ou gazeux dans une machine de traitement de récipients, comportant un conduit principal (2) en forme de tube au moins en sections et destiné à transporter un premier fluide liquide, un dispositif de guidage des fluides (4) qui entoure le conduit principal (2), ledit dispositif de guidage des fluides (4) comportant au moins un conduit (56) pour le guidage d'un fluide et ledit dispositif de guidage des fluides (4) étant disposé par rapport au conduit principal (2) de manière rotative par rapport à un axe de rotation (X) prédéfini, et au moins un dispositif d'étanchéité (10), constitué d'au moins deux éléments (12, 14) et adapté à assurer l'étanchéité des corps tournant les uns par rapport aux autres, étant prévu entre au moins une paroi extérieure (2a) du conduit principal (2) et le dispositif de guidage des fluides (4),
**caractérisé en ce que**
le dispositif d'étanchéité (10) comporte un corps de base (12) réalisé en matière plastique, et un corps de précontrainte (14) élastique, en appui au moins partiellement contre le corps de base (12) et destiné à précontraindre le corps de base (12), ledit corps de précontrainte (14) étant réalisé en matière plastique et le corps de base (12) comportant une saillie (16) orientée dans le sens radial afin que le corps de base (12) soit disposé de manière immobile en rotation par rapport au dispositif de guidage des fluides (4), et le corps de base (12) comportant deux parties (22) et (24), la partie (24) étant une lèvre d'étanchéité primaire et la partie (22) étant une lèvre d'étanchéité statique, et le corps de précontrainte (14) étant enserré par les deux lèvres d'étanchéité (22, 24) de telle sorte qu'aucune zone du corps de précontrainte (14) n'entre en contact avec la paroi extérieure (2a) du conduit (2).

2. Dispositif de distribution de fluide (1) selon au moins l'une des revendications précédentes, **caractérisé en ce que** le corps de base (12) et le corps de précontrainte sont en appui l'un contre l'autre au moins en sections.

3. Dispositif de distribution de fluide (1) selon au moins l'une quelconque des revendications précédentes, **caractérisé en ce que** le corps de base (12) comporte au moins une zone d'ouverture, dans laquelle le corps de précontrainte n'est pas masqué par le corps de base (12).

4. Dispositif de distribution de fluide (1) selon au moins l'une quelconque des revendications précédentes, **caractérisé en ce que** le corps de base (12), dans au moins une zone et en particulier dans la zone d'ouverture, est situé à fleur du corps de précontrainte (14).

5. Dispositif de distribution de fluide (1) selon au moins l'une quelconque des revendications précédentes, **caractérisé en ce que** le corps de base est réalisé dans un matériau qui est choisi dans un groupe de matériaux qui contient le PTFE, le PA, le PE, des combinaisons de ceux-ci et tout matériau similaire.

6. Dispositif de distribution de fluide (1) selon au moins l'une quelconque des revendications précédentes, **caractérisé en ce que** le corps de précontrainte est réalisé dans un matériau qui est choisi dans un groupe de matériaux qui contient l'EPDM, le FKM, le HNBR, le NBR, des combinaisons de ceux-ci et tout matériau similaire.

7. Dispositif de distribution de fluide (1) selon au moins l'une quelconque des revendications précédentes, **caractérisé en ce que** le corps de précontrainte (14) est revêtu au moins en partie d'une couche en matière plastique.

8. Dispositif de distribution de fluide (1) selon au moins l'une quelconque des revendications précédentes, **caractérisé en ce qu'**au moins une zone du corps de précontrainte est directement en appui contre le conduit principal (2) ou le dispositif de guidage des fluides (4).

9. Dispositif de distribution de fluide (1) selon au moins l'une quelconque des revendications précédentes, **caractérisé en ce que** le corps de base comporte au moins un évidement (34).

10. Dispositif de distribution de fluide (1) selon au moins l'une quelconque des revendications précédentes, **caractérisé en ce qu'**un canal (36), qui s'étend jusqu'au corps de précontrainte, est disposé dans le corps de base.

11. Dispositif de distribution de fluide (1) selon au moins l'une quelconque des revendications précédentes, **caractérisé en ce que** le dispositif d'étanchéité, outre le corps de base (12) et le corps de précontrainte (14), ne comporte pas d'autres éléments.

12. Dispositif de distribution de fluide (1) selon au moins l'une quelconque des revendications précédentes, **caractérisé en ce que** le dispositif d'étanchéité est réalisé sans métal.
